(19)

**Europäisches Patentamt**
**European Patent Office**
**Office européen des brevets**

(11) **EP 3 282 864 B1**

(12) **EUROPEAN PATENT SPECIFICATION**

(45) Date of publication and mention
of the grant of the patent:
**03.06.2020 Bulletin 2020/23**

(51) Int Cl.:
***A23G 9/38*** *(2006.01)*

(21) Application number: **16731368.3**

(22) Date of filing: **15.04.2016**

(86) International application number:
**PCT/NL2016/050266**

(87) International publication number:
**WO 2016/167660 (20.10.2016 Gazette 2016/42)**

(54) **A FROZEN AERATED CONFECTIONERY PRODUCT AND A METHOD FOR PREPARING SUCH A PRODUCT**

GEFRORENES UND DURCHLÜFTETES SÜSSWARENPRODUKT UND VERFAHREN ZUR HERSTELLUNG SOLCH EINES PRODUKTS

PRODUIT DE CONFISERIE AÉRÉ ET CONGELÉ ET PROCÉDÉ DE PRÉPARATION D'UN TEL PRODUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2015 EP 15163631**

(43) Date of publication of application:
**21.02.2018 Bulletin 2018/08**

(73) Proprietor: **FrieslandCampina Nederland B.V.**
**3818 LE Amersfoort (NL)**

(72) Inventors:
• **BARTELS-ARNTZ, Marjoleine Maria Theodora Gerarda**
**6708 WH Wageningen (NL)**
• **ALTING, Aart Cornelis**
**6708 WH Wageningen (NL)**
• **WESTERBEEK, Johannes Martinus Maria**
**6708 WH Wageningen (NL)**

(74) Representative: **FrieslandCampina Nederland B.V.**
**IP Department**
**P.O. Box 238**
**Bronland 20**
**6700 AE Wageningen (NL)**

(56) References cited:
**GB-A- 1 282 502**

• **DATABASE FSTA [Online] INTERNATIONAL FOOD INFORMATION SERVICE (IFIS), FRANKFURT-MAIN, DE; 2003, OLENEV YU A: "Raw materials for ice cream.", XP002746601, Database accession no. FS-2003-02-Pn0290**
• **MARSHALL R T ET AL: "Ice Cream. Chapter 4. Composition and Properties, Fifth Edition", ICE CREAM, XX, XX, 1 January 2000 (2000-01-01), pages 22-23,28, XP002282748,**
• **SHIH-YOUNG LEE ET AL: "STRUCTURAL AND FUNCTIONAL PROPERTIES OF CASEINATE AND WHEY PROTEIN ISOLATE AS AFFECTED BY TEMPERATURE AND PH", JOURNAL OF FOOD SCIENCE, WILEY-BLACKWELL PUBLISHING, INC, US, vol. 57, no. 5, 1 September 1992 (1992-09-01), page 1210, XP000311012, ISSN: 0022-1147**

**Description**

TECHNICAL FIELD OF THE INVENTION

The present invention relates to a method for preparing an aerated frozen confectionery product, preferably ice cream. The present invention further relates to an aerated frozen confectionery product and to the use of an ingredient mix for preparing an aerated frozen confectionery product.

BACKGROUND OF THE INVENTION

There are numerous types of frozen aerated products, such as edible ice cream which are essentially mixtures of water, sugar, flavor substances and other components, such as fat, and which are partly frozen and whipped such that a rigid foam has been formed. In most types of these products, milk or cream is an important ingredient. Nowadays, a part of the milk solids non-fat is often substituted by whey constituents to lower the ingredient costs. However, the price of whey (constituents) has steadily increased over the last years, which has made it commercially less attractive to use whey proteins in ice cream. In some countries, the milk fat is substituted by vegetable fat, such as hydrogenated palm kernel oil.

As said, different types of aerated confectionery products are available. However, an important difference exists between so called frozen (i.e hardened) aerated products, such as frozen ice cream and soft serve aerated products, such as soft serve ice cream. The latter is made on the spot and directly sold at outlet shops and is consumed within minutes. It is not deep frozen and never kept frozen for long time because its temperature is usually a few degrees below 0 °C and therefore contains a fairly large amount of non-frozen water. Furthermore, its fat content and overrun are rather low. Typically the fat content of such products ranges between 3 and 12% and the overrun ranges between 30 and 60% (H.D. Goff and R.W. Hartel; Ice Cream, seventh edition, Chapter 8, Springer, New York 2013).

On the other hand frozen aerated products, such as industrial ice cream are usually packed in retail sized portions and are considerably lower in temperature, i.e. well below the freezing point of water. Typically, the temperature of frozen aerated products before they are consumed is lower than -5°C, most often -10°C or lower. Due to this low temperature, the product is in a frozen state and has a shelf life of up to two years.

Depending on the ingredients used, different types of frozen confectionery products, such as ice cream, may be prepared. Typically, a separation is made between "premium" ice cream and "mainstream" ice cream.

The "premium" range of frozen confectionery products, such as ice cream, is usually characterized by a relatively low overrun i.e. below 50% and high levels of protein and fat. Usually, these types of ice cream are made with fat from a dairy source and contain little or no fat from a non-dairy or vegetable source. Moreover, due to the high amount of quality ingredients, these frozen confectionery products are relative expensive to manufacture and thus relative costly to the consumer. Typically, the solids content of these "premium" types of products is 38-40% by weight (on the ice cream mixture) or even higher (H.D. Goff and R.W. Hartel; Ice Cream, seventh edition, chapter 2, Springer, New York 2013). Because of the low overrun, these frozen products are much less susceptible for structure damage as a result of heat shocks, which normally occur during storage and transport.

In such "premium" products, the fat content is usually high and is typically higher than 10% by weight (H.D. Goff and R.W. Hartel; Ice Cream, seventh edition, chapter 2, Springer, New York 2013)

On the other hand, so called "mainstream" frozen confectionary products comprise synthetic emulsifiers and specific hydrocolloids and considerably lower amounts of quality ingredients, such as dairy proteins and are thus less expensive. Typically, these types of products have an overrun well above 50%. In most cases the overrun of such products ranges from 80 to 120%.

These products are more susceptible to heat shock, which means that the quality of these products is highly influenced by temperature variations, e.g. during transport or storage.

In view of the above, a need remains for affordable frozen aerated confectionery products, such as ice cream, having excellent properties, such as mouthfeel, melt resistance and heat shock stability.

GB 1 282 502 describes a process for the preparation of non-butterfat food products which comprises forming a composition comprising liquid whey with at least 0.1% by weight based on the total composition of an alkali metal polyphosphate, thereafter homogenizing the composition at a temperature from 65.6° to 82.2° C (150 to 180° F) and thereafter recovering a liquid non-butterfat food product. The preparation of non-butterfat food products in the form of frozen desserts, such a mellorines and ice milks, is mentioned.

SUMMARY OF THE INVENTION

A first aspect of the present invention relates to a method for preparing an aerated frozen confectionery product, comprising the steps of:

a) providing an ingredient mix, which mix comprises:

- 3 to 15% by weight fat;
- 5 to 40% by weight carbohydrates;
- up to 5% by weight of a stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5 % by weight protein, whereof at least 30% by weight is caseinate;
- and which mix contains fat and protein in a weight ratio of at least 5;

b) pasteurizing and homogenizing the ingredient mix;
c) ripening the ingredient mix of step b) for at least one hour at a temperature between 0 and 10°C;
d) freezing while aerating the ingredient mix of step c) up to an overrun of 75 to 150%;
e) hardening the frozen aerated ingredient mix.

With the method according to the present invention, it has now become possible to prepare a confectionery product which has very good sensorial properties, excellent melting properties and a good heat shock stability, but which comprises an exceptionally low amount of protein compared to other frozen aerated confectionery products known in the art.

Due to the very low amount of protein which is used in the method according to the present invention, the costs for preparing such products can be reduced without significantly compromising on physical and sensorial properties of the product prepared. In this regard it is noted that the frozen aerated confectionery product prepared with the method according to the present invention is preferably ice cream.

A second aspect of the present invention relates to an aerated frozen confectionery product having an overrun of 75 to 150%, comprising:

- 3 to 15% by weight fat;
- 5 to 40% by weight carbohydrates;
- up to 5% by weight stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5% by weight protein, whereof at least 30% by weight of the total amount of protein is caseinate;
- and which product contains fat and protein in a weight ratio of at least 5.

A third aspect of the present invention relates to a the use of an ingredient mix comprising:

- 3 to 15% by weight fat;
- 5 to 40% by weight carbohydrates;
- up to 5% by weight stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5% by weight protein, whereof at least 30% by weight of the total amount of protein is caseinate;
- and which mix contains fat and protein in a weight ratio of at least 5; for preparing the frozen aerated confectionery product as defined here above.

DEFINITIONS

The term *"protein"* as used herein has its conventional meaning and refers to a linear polypeptide comprising at least 10 amino acid residues.

The term *"dairy protein"* as used herein has its conventional meaning and refers to proteins, such as casein, caseinate and whey protein, present in milk from human or non-human mammals, such as bovines (e.g. cows), goats, sheep or camels.

The term *"milk"* as used herein has its conventional meaning and refers to the liquid produced by the mammary glands of mammals, such as bovines (e.g. cows), goats, sheep or camels, and may be thermized or pasteurized.

The term *"fat"* or *"lipid"* as used herein has its conventional meaning and refers to compositions, including droplets and globules, of esters of glycerol and fatty acids (i.e triglycerides). In this regard it is noted that the terms lipid and fat are used interchangeably.

The term *"aerated frozen confectionery product"* as used herein has its conventional meaning and refers to a frozen confectionery product wherein air-bubbles are entrapped in a frozen matrix by means of a so called churning step. Examples of such frozen aerated confectionery products are ice cream, frozen yoghurt and other aerated frozen desserts. Typically aerated frozen confectionery products have a temperature below -5°C, most often below -10°C.

The term *"churning"* as used herein has its conventional meaning and refers to an operation wherein an ingredient mix, e.g. for ice cream, is stirred and gradually cooled whilst being in contact with the cold wall of an ice machine and at the same time air or another suitable gas is introduced into the mix. In this churning process, a partial phase inversion of the emulsified ingredient mix takes place, which causes the stability against melting.

The term *"overrun"* as used herein has its conventional meaning and refers to the change in density by a given mass of food product due to aeration. The overrun of an aerated food product may be determined as has been described in Douglas Goff and Richard W. Hartel, 2013, Ice Cream 7th edition Ed. Springer, New York. page 188:

$$\%overrun = \frac{weigth\ of\ mix - weight\ of\ same\ volume\ of\ aerated\ product}{weight\ of\ same\ volume\ of\ aerated\ product}$$

The term *"hardening"* has its conventional meaning which refers to the freezing of an aerated composition. Typically, the hardening of an aerated composition, e.g. for use in the preparation of ice cream is carried out at -18 °C or lower.

The term "ripening" or "ageing" of an ice cream mix has its conventional meaning and relates to the process in which the emulsion (ingredient mix) is sensitized to churning by partial desorption of protein from the fat droplets.

DETAILED DESCRIPTION OF THE INVENTION

A first aspect of the present invention relates to a method for preparing an aerated frozen confectionery product, comprising the steps of:

a) providing an ingredient mix, which mix comprises:

- 3 to 15 % by weight fat;
- 5 to 40% by weight carbohydrates;
- 0.1 to 5% by weight of a stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5 % by weight protein, whereof at least 30% by weight is caseinate;
- and which mix contains fat and protein in a weight ratio of at least 5;

b) pasteurizing and homogenizing the ingredient mix;

c) ripening the ingredient mix of step b) for at least one hour at a temperature between 0 and 10°C;
d) freezing while aerating the ingredient mix of step c) up to an overrun of 75 to 150%;
e) hardening the frozen aerated ingredient mix.

With respect to the above mentioned method it is noted that in step b), pasteurizing and homogenizing may be carried out in any order.

In the art, an amount of about 3 % protein (normally added as skim milk powder and/or whey proteins) is regarded as a typical protein amount in these types of products. Hence, it has never been contemplated to significantly further reduce the protein content as it was believed it would lead to inferior products or cumbersome processing of the ingredient mix during preparation.

However, with the method according to the present invention it has now become possible to prepare an aerated frozen confectionery product which has very good sensorial properties, excellent melting properties and a good heat shock stability, but which comprises an exceptionally low amount of protein compared to frozen aerated confectionery products known in the art. One of the advantages of the method of the present invention is thus that the costs for preparing such products can be reduced significantly.

It has remarkably been found that the total amount of protein in the ingredient mix of step a) may range between 0.25 to 1.5% by weight. Preferably, the total amount of protein in the ingredient mix used in the method of the present invention ranges between 0.25 to 1.25%, more preferably between 0.4 to 1.2% by weight, most preferably 0.5 to 1.0 % by weight.

Despite the very low amount of protein which is used in the ingredient mix of the method of the present invention, the physical and sensorial properties of the products prepared therewith are not compromised. In this regard it is noted that the present inventors have found that it is possible to use relatively low amounts of protein in the ingredient mix of step a), if a considerable part of the proteins present in said mix are caseinate proteins. According to the present invention, at least 30% by weight of the total amount of protein present in said ingredient mix are caseinate proteins, however a larger proportion of caseinate proteins may also be used.

Hence, preferably at least 50%, more preferably at least 80%, and even more preferably 95% by weight of the total amount of proteins in said ingredient mix may be caseinate proteins. The other proteins present in said ingredient mix may originate from skim milk powder, non-fat dry milk solids and/or may be whey proteins.

It is further noted that it is particularly preferred to use caseinate salts, such as sodium caseinate or calcium caseinate in the ingredient mix of step a) of the method according to the present invention. Sodium caseinate is particularly preferred.

Caseinate salts are commonly available to the person skilled in the art. They are prepared by dissolving acid-precipitated casein in alkali (e.g., NaOH, KOH, NH4OH, $Ca(OH)_2$, and $Mg(OH)_2$), and spray drying or roller drying the resulting solution. Sodium caseinate is the most common product, although potassium caseinate and calcium caseinate are also commonly used. A range of caseinates is available from FrieslandCampina DMV, The Netherlands.

As a source for caseinate, so called converted casein may also be used. The term *"converted"* casein is known in the art and relates to casein generally in dry form and in addition to casein it also contains an alkali metal salt; when converted casein is dissolved in an aqueous medium, the casein is converted into the corresponding caseinate by the alkali metal salt.

For preparing a frozen aerated confectionery product with a good quality but with a relatively low protein content, the ratio fat to protein in the ingredient mix of step a) from which the frozen aerated product has been prepared, is also of importance. The inventors of the present invention have found that a very good frozen aerated confectionery product can be prepared if on a weight basis the ratio fat to protein in the ingredient mix of step a) is 5 or higher. In products wherein the total amount of protein is relatively low, such as 1% by weight or lower, the ratio fat to protein on a weight basis is preferably 10 or higher.

Without wishing to be bound by any theory, it is assumed that if protein comprising caseinate is dosed at regular, conventional concentrations, emulsion droplets stabilized with caseinate are too well stabilized to allow a sufficient level of churning of the fat droplets during the combined freezing and aeration of the ingredient mix. However, at a lower dosage of protein comprising caseinate (higher fat-protein ratio) a sufficient level of churning is allowed, resulting in a frozen aerated product, such as ice cream, with the required sensory properties.

In step c) of the method of the present invention, the ingredient mix obtained in step b) is preferably ripened for 3 to 24 hours at a temperature between 0 and 10° C. During such ripening the ingredient mix (emulsion) is sensitized to churning by partial desorption of protein from the fat droplets. This has an important effect on the stability of the aerated product formed in the subsequent steps. The hardening of the frozen aerated ingredient obtained in step d) is carried out in order to rapidly adjust the temperature of the product to retain its shape and to give it sufficient shelf life with respect to chemical and enzymatic reactions, as well as to the physical structure. Hardening is preferably carried out at a temperature below -18°C, more preferably below -30°C, even more preferably below -35°C. It is particularly preferred to pass the product prepared, such as packaged ice cream, through a so called hardening-tunnel, in which very cold air (e.g. -35°C) is blown over the product.

The temperature of the frozen aerated product prepared with the method according to the present invention before consumption is lower than -5°C, preferably lower than -10°C.

Furthermore, the ingredient mix of step a) of the method of the present invention typically comprises between 50 and 70% by weight water. Hence, a considerable part of the water present in the product according to the present invention will be in frozen state.

The method according to the present invention is particularly suitable for making "mainstream" types of aerated frozen confectionery products, such as ice cream. In these types of products the amount of protein is already fairly low and further reducing the amount of protein has been considered impossible. The overrun of these products preferably range between 75 and 120%, although the overrun may be as high as 150%.

The fat used in the preparation of the frozen aerated products of the present invention, such as ice cream, may come from vegetable or animal origin. Alternatively, use is made of a combination of animal fat and vegetable fat. The animal fat may be butter, butter oil and/or cream. The vegetable fat may be palm kernel oil, palm oil fractions, coconut oil, soy oil or rapeseed oil, or mixtures thereof. The oils may be natural (unhardened), fully or partially hardened.

Preferably, in the ingredient mix of step a) of the method according to the present invention the fat content ranges between 3 to 12% by weight, preferably between 3 to 11% by weight, even more preferably between 5 to 10% by weight, most preferably between 5 to 8 % by weight.

Carbohydrates used in the preparation of the frozen aerated products according to the present invention comprise monosaccharides (e.g. dextrose, fructose, galactose), disaccharides (e.g. sucrose, lactose), starch hydrolysates (e.g. glucose syrup 90 to 20 DE (combination of mono, di and oligosaccharides)), maltodextrins (DE <20), soluble fibre (e.g. inulin, fructo-oligosaccharide, polydextrose), sugar alcohols (e.g. erythritol, xylitol, sorbitol, mannitol, lactitol, maltitol), glycerol. Different combinations of these materials may be used as sweeteners, freezing point depressants and bulk fillers depending upon the required final product properties like sweetness, calorie content and/or texture. The ingredient mix of step a) of the method according to the present invention preferably comprises between 10 and 30% by weight carbohydrates.

Said ingredient mix may also comprise high intensity sweeteners (e.g. aspartame, neotame, cyclamate, saccharine, acesulfame-K, sucralose), or sweeteners from vegetable original like Stevia. Preferred amounts used are up to 0.5% by weight of said ingredient mix.

Besides fat and protein, the ingredient mix of step a) comprises one or more stabilizers. The stabilizers used are chosen from the group of locust bean gum, guar gum, carrageenan, microcrystalline cellulose, carboxy-methylcellulose, pectin, gum Arabic, gellan gum, xanthan gum, modified starch, alginate, gum ghatti, gum karaya, gum konjac, agar-agar, oat or a combination thereof. More preferably, the stabilizers are selected from the group of locust bean gum, guar gum, carrageenan or combination thereof. Amounts thereof used in the ingredient mix of step a) of the method of the invention are preferably 0.2 to 1% by weight.

The ingredient mix of step a) of the method according to the present invention, comprises an emulsifier. Preferably the emulsifier comprises mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof.

In a preferred embodiment emulsifier comprises mono- and/or diglycerides of fatty acids (i.e. mono and/or diesters of glycerol and fatty acids). These fatty acids can be saturated or unsaturated and/or may comprise C16 and/or C18 carbon chains.

In an alternative embodiment, the emulsifier comprises derivatives of mono and diglycerides, such as esters of lactic acid (LACTEM), acetic acid (ACETEM) and/or diacetyltartaric (DATEM) of mono- and/or diglycerides.

In yet another embodiment, the emulsifier comprises sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof. Combinations of 2 or more emulsifiers from the group above may be preferably used in the ingredient mix of step a) of the method of the present invention. Wherein the polyglycerol ester of fatty acids is preferably polyglycerol polyricinoleate. Wherein the polyoxyethylene sorbitan fatty acid mono-esters preferably are selected from polyoxyethylene sorbitan mono-oleate, polyoxyethylene sorbitan monolaurate, polyoxyethylene sorbitan monostearate and combinations thereof.

In a more preferred embodiment the emulsifier comprises a polyoxyethylene sorbitan fatty acid mono-ester, even more preferably the emulsifier comprises polyoxyethylene sorbitan mono-oleate.

Preferred amounts of these emulsifiers in the ingredient mix of step a) range between 0.2 to 1% by weight.

The total amount of stabilizers and emulsifiers in the ingredient mix of step a) of the method of the present invention preferably does not exceed 1% by weight.

The total solids content of said ingredient mix preferably ranges up to 40 % by weight. Preferably the total solids content ranges between 35 and 40% by weight of said ingredient mix.

Said ingredient mix may further contain flavours and/or colorants customary in the art.

To further enhance the "milky notes" of the aerated frozen product of the invention, if deemed necessary, non-protein or non casein containing milk solids, such as lactose or UF permeate from milk or whey, may be incorporated into the ingredient mix of step a).

A second aspect of the present invention relates to a frozen aerated confectionery product having an overrun of 75 to 150%, comprising:

- 3 to 15% by weight fat;
- 5 to 40% by weight carbohydrates;
- up to 5% by weight stabilizer and/or emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5% by weight protein, whereof at least 30% by weight of the total amount of protein is caseinate;
- and which product contains fat and protein in a weight ratio of at least 5.

In the frozen aerated confectionery product according to the present invention, on a weight basis the ratio fat to protein is preferably equal or higher than 10.

The total amount of protein in the frozen aerated product according to the present invention ranges between 0.25 to 1.25% by weight, more preferably between 0.4 to 1.2% by weight, most preferably between 0.5 to 1.0% by weight.

At least 30% by weight of the total amount of protein is caseinate protein. However, significantly more caseinate may be used. Hence, in a preferred embodiment of the present invention, at least 50%, more preferably at least 80% and even more preferably at least 95% by weight of the total amount of protein is caseinate.

Preferably, caseinate salts are used, such as sodium caseinate or calcium caseinate. Sodium caseinate is particularly preferred.

The fat used in the frozen aerated product according to the present invention may come from vegetable or animal origin. Alternatively, a combination of animal fat and vegetable fat is used. The animal fat may be butter, butter oil and/or cream. The vegetable fat may be palm kernel oil, palm oil fractions, coconut oil, soy oil, rapeseed oil or mixtures thereof. The oils may be natural (unhardened), fully or partially hardened.

Preferably, the fat content in the frozen aerated product according to the present invention ranges between 3 to 12% by weight, preferably between 3 to 11% by weight, even more preferably between 5 to 10% by weight and most preferably between 5 to 8% by weight.

The carbohydrates and their amounts used in the frozen aerated product according to the present invention, may be as has been described above in relation to the method of the present invention. Furthermore, also the stabilizers and/or emulsifiers and their amounts may be chosen from those described above in relation to the method of the present invention.

In a preferred embodiment of the present invention, the frozen aerated product has an overrun of 75 to 150%, comprises 3 to 10% by weight fat, 0.25 to 1.0% by weight protein of which at least 50% by weight is caseinate, preferably sodium caseinate, a total solids content between 35 and 40% by weight and wherein the ratio fat to protein is on a weight basis 5 or higher, preferably 10 or higher.

In a further preferred embodiment of the present invention, the frozen aerated product has an overrun of 75 to 150% comprises 3 to 10% by weight fat, 0.25 to 1.0% by weight protein of which at least 80% by weight is sodium caseinate, a total solids content between 35 and 40% by weight and wherein the ratio fat to protein is on a weight basis 5 or higher, preferably 10 or higher.

The frozen aerated product according to the present invention is preferably ice cream, most preferably hardened ice cream.

With respect to the frozen aerated product according to the present invention, it is noted that it may be prepared according to the method of the present invention.

A further aspect of the present invention relates to an ingredient mix as has been used in relation to step a) of the method of the present invention.

A last aspect of the present invention relates to the use of such an ingredient mix for preparing a frozen aerated confectionery product as has been described above.

The present invention will be illustrated further by means of the following nonlimiting examples.

EXAMPLES

Sensory analysis

The sensory properties of the ice cream samples were evaluated before and after heat shock by an internal expert panel. Ice cream variants were evaluated on the following attributes: body and texture, appearance and melting quality. A "+" in the sensory test was rated as good and a "-" as unacceptable.

Melting behaviour:

Melting tests were carried out on the different frozen ice cream variants. Ice cream variants were kept for 90 minutes on a sieve (stainless steel, mesh size 2.5 x 2.5 mm) in a temperature-controlled cabinet having a constant temperature of 20°C. Prior to melting, the ice-cream variants had the following dimensions 67 x 97 x 51 cm (w x 1 x h). The melted ice cream which dripped through the sieve was weighed in line. In general, good quality ice cream is defined as having a melt-down% of less than 20%, preferably less than 15% after 90 minutes at 20°C.

The percentage of melted ice cream was calculated according to the following formula:

$$M2/M1*100\% = \% \text{ melted ice cream}.$$

Where,

M1 = mass of the frozen confectionary product in gram
M2 = mass of the melted ice cream (liquid) in gram.

In the tables below the results of the melting tests are shown as the melting percentage after 90 minutes of storage at 20°C.

Freeze-thaw stability(resistance to heat shock):

Freeze-thaw stability was simulated by subjecting frozen ice cream variants to temperature cycling of -20°C to -10°C. Temperature was kept at -20°C for 12 h and changed within 30 minutes to -10°C and kept for 11.5 h at this temperature. After 11.5 h, the temperature was again changed within 30 minutes to -20°C and kept for 11.5 h, this cycle was repeated for a period of 5 days (heat shock).

Particle size distribution:

The fat particle size distribution (PSD) was obtained using a Malvern mastersizer 2000 laser diffraction particle size analyzer. Ice cream mixtures were diluted in about 1:10 in water and/or 1:10 diluted in 10 mM SDS/EDTA solution.

The fat PSD was measured both directly after the emulsification process and after the ageing process. Differences between the two measuring points are indicative for partial destabilisation of the emulsion upon cooling and storage. Dilution in SDS/EDTA solution enables to distinguish whether larger particle fractions are related to either aggregation/flocculation of emulsion droplets or to poor emulsification and/or partial coalescence.

**Example 1: Ice cream comprising 5 wt% vegetable fat and 0.25 to 3 w/w% protein from Na-caseinate and reference 3% protein from Skimmed Milk Powder**

Ice cream mixes were prepared according to the formulations shown in Table 1.

Table 1

| Examples 1, 6 and 7 in Table 1 are not according to the invention. | | | | | | | |
|---|---|---|---|---|---|---|---|
| Example % w/w | 1 | 2 | 3 | 4** | 5 | 6 | 7 |
| Coconut fat: Hardened coconutfat K93 Fujioil Europe | 5.0 | 5.0 | 5.0 | 5.0 | 5.0 | 5.0 | 5.0 |
| Skimmed milk powder (SMP) medium heat (Promex) | 8.6 | | | | | | |

(continued)

| Examples 1, 6 and 7 in Table 1 are not according to the invention. | | | | | | | |
|---|---|---|---|---|---|---|---|
| Example % w/w | 1 | 2 | 3 | 4** | 5 | 6 | 7 |
| Sodium Caseinate (Excellion EM7, FrieslandCampina DMV) | | 0.28 | 0.55 | 0.55 | 1.1 | 2.2 | 3.3 |
| Dextrose | 2.0 | 4.0 | 4.0 | 4.0 | 4.0 | 4.7 | 5.9 |
| Sucrose | 12.7 | 12.5 | 12.5 | 12.5 | 12.5 | 12.0 | 9.0 |
| Glucodry 355 (Sedamyl) | 7.0 | 12.8 | 12.5 | 12.5 | 12.2 | 11.0 | 11.7 |
| Cremodan 709 VEG (Danisco)*** | 0.6 | 0.6 | 0.6 | 0.6 | 0.6 | 0.6 | 0.6 |
| Water | 64.1 | 64.8 | 64.9 | 64.9 | 64.6 | 64.5 | 64.5 |
| Total | 100.0 | 100.0 | 100.0 | 100.0 | 100.0 | 100.0 | 100.0 |
| | | | | | | | |
| Protein content % w/w | 3 | 0.25 | 0.5 | 0.5 | 1 | 2 | 3 |
| Casein(ate) protein level* | 2.4 | 0.25 | 0.5 | 0.5 | 1 | 2 | 3 |
| Fat:protein ratio | 1.8 | 21.3 | 10.8 | 10.8 | 5.4 | 2.7 | 1.8 |
| *SMP: calculated with 80% casein protein and Na caseinate calculated with 90.7% protein of which is 100% caseinate protein.<br>** 130% overrun<br>*** Cremodan 709 VEG is a standard commercially available emulsifier / stabilizer cocktail for ice-cream preparation where the emulsifier is of the type mono- and diglycerides, partly unsaturated and the stabilizers are locust bean gum, guar gum and carrageenan. | | | | | | | |

Water, protein powder and carbohydrate ingredients were combined in a mix tank and subjected to high shear at a temperature of 60°C. The emulsifier/stabilizer blend was added to the melted fat (70°C) and this cocktail was added to the water phase while stirring. The resulting mix was pasteurized at 82°C for 120 seconds, and subsequently homogenized at 175/20 bar and 75°C - 82°C, and followed by a rapid in line cooling step to 4°C using a plate heat exchanger. The mix was held overnight at 2-7°C prior to freezing. The ice cream mixes were frozen using an APV MF 50 ice cream freezer (scraped surface heat exchanger) at a mix flow rate of about 18 L/h, an extrusion temperature of -5.5°C to -6.2°C and an overrun at the freeze outlet of about 100% (130% for example 1.4). After filling, the ice cream was directly frozen overnight in a hardening freezer at <-25°C and then stored at -18/-20°C. Apart of the samples was subjected to a heat shock test.

From Table 2 below it is clear that good quality ice cream was prepared using less than 2% protein from caseinate. Increasing protein content from 0.25% to 1% results in improved body, texture and creaminess, comparable to ice cream with 3% protein from skim milk powder. However, at higher levels of caseinate the ice cream quality decreased to an unacceptable quality in contrast to the application of SMP as a protein source. The table shows that ice cream prepared with a lower concentration sodium caseinate, a higher fat/protein ratio, results in clearly better physical and sensorial properties than ice cream prepared with higher sodium caseinate content.

Table 2

| Example | 1 | 2 | 3 | 4 | 5 | 6 | 7 |
|---|---|---|---|---|---|---|---|
| Melting % w/w | 3 | 8 | 7 | 5 | 7 | 14* | 40 |
| Melting % w/w after heat shock | 5 | 9 | 8 | 6 | 10 | 20 | 56 |
| Sensory | + | + | + | + | + | +/- | - |
| *visual poor performance | | | | | | | |

### Example 2: Ice cream comprising 10 wt% vegetable fat and 0.25 to 1.0 w/w% protein from Na-caseinate

Ice cream mixes were prepared according to the formulations shown in Table 3.

Table 3

| Example % w/w | 1 | 2 | 3 |
|---|---|---|---|
| Coconut fat: Hardened coconut fat K93 Fujioil Europe | 10.0 | 10.0 | 10.0 |
| Sodium Caseinate (Excellion EM7, FrieslandCampina DMV) | 0.28 | 0.55 | 1.10 |
| Dextrose | 3.6 | 3.7 | 3.8 |
| Sucrose | 10.8 | 10.8 | 10.6 |
| Glucodry 355 (Sedamyl) | 10.0 | 10.0 | 10.0 |
| Cremodan 709 VEG (Danisco)** | 0.5 | 0.5 | 0.5 |
| Water | 64.8 | 64.5 | 64.0 |
| Total | 100.0 | 100.0 | 100.0 |
| Protein content % w/w | 0.25 | 0.5 | 1.0 |
| Caseinate protein level* | 0.25 | 0.5 | 1.0 |
| Fat:protein ratio | 41.4 | 20.7 | 10.4 |

*SMP: calculated with 80% casein protein and Na caseinate calculated with 90.7% protein of which is 100% caseinate protein.
** Cremodan 709 VEG is a standard commercially available emulsifier / stabilizer cocktail for ice-cream preparation where the emulsifier is of the type mono- and diglycerides, partly unsaturated and the stabilizers are locust bean gum, guar gum and carrageenan.

Water, protein powder and carbohydrate ingredients were combined using a mix tank and subsequently subjected to high shear at a temperature of 60°C. The emulsifier/stabilizer blend was added to the melted fat (70°C) and this cocktail was added to the water phase while stirring. The resulting mix was pasteurized at 82°C for 120 seconds, homogenized (140/35 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of 18 L/h, an extrusion temperature of -5.5°C to -6.2°C and an overrun at the freeze outlet of about 100%. After filling, the ice cream was directly, frozen overnight in a hardening freezer at <-25°C and then stored in freezer of -18/-20°C. Apart of the samples was subjected to a heat shock test.

Table 4

| Example | 1 | 2 | 3 |
|---|---|---|---|
| Melting % w/w | 7 | 11 | 11 |
| Melting % w/w after heat shock | 8 | 11 | 10 |
| Sensory* | + | + | + |
| Sensory after heat shock | + | + | + |
| Fat particle size distribution | | | |
| PSD fresh** d(0.5)/d(0.9) water (μm) | 1.0/1.6 | 0.9/1.8 | 0.7/1.6 |
| PSD fresh** d(0.5)/d(0.9) SDS/EDTA (μm) | 1.0/1.5 | 0.8/1.7 | 0.7/1.6 |
| PSD after ripening d(0.5)/d(0.9) Water (μm) | 1.1/2.0 | 0.9/1.8 | 0.7/1.6 |

*increasing protein content from 0.25% protein to 1% improves body, texture and creaminess of the ice cream
** samples were diluted in water or SDS/EDTA after cooling down.

Table 4 shows again that at low concentration of sodium caseinate, at high fat/protein ratio, ice creams having good physical and sensorial properties were obtained. In line with these observations the fat particle size distribution figures show that at all protein levels good emulsions good be prepared, where at the higher protein content the d (0.5) was a bit smaller.

### Example 3: Ice cream comprising 10% vegetable fat and different emulsifier/stabilizer systems

Ice cream mixes were prepared according to the formulations shown in Table 5 below.

Table 5

| Example % w/w | 1 | 2 | 3 | 4 |
|---|---|---|---|---|
| Coconut fat: Hardened coconut fat K93 Fujioil Europe | 10.0 | 10.0 | 10.0 | 10.0 |
| Sodium Caseinate (Excellion EM7, FrieslandCampina DMV) | | | 1.1 | 1.1 |
| Sodium Caseinate (Excellion Sodium Caseinate Spray, FrieslandCampina DMV) | 1.1 | | | |
| Excellion EM7 High Viscosity* **** | | 1.1 | | |
| Dextrose | 4.1 | 4.1 | 3.8 | 3.8 |
| Sucrose | 11.0 | 11 | 10.6 | 10.6 |
| Glucodry 355 (Sedamyl) | 9.7 | 9.7 | 10.0 | 10.0 |
| Cremodan 1001 IcePro (Danisco)** | 0.6 | 0.6 | | |
| Cremodan 709 VEG (Danisco)*** | | | 0.5 | |
| Cremodan 315 (Danisco)**** | | | | 0.5 |
| Water | 63.5 | 63.5 | 64.0 | 64.0 |
| Total | 100.0 | 100.0 | 100.0 | 100.0 |
| | | | | |
| Protein content % w/w* | 1.0 | 1.0 | 1.0 | 1.0 |
| Caseinate level* | 1.0 | 1.0 | 1.0 | 1.0 |
| Fat:protein ratio | 10.5 | 10.5 | 10.5 | 10.4 |

*Na caseinate and Excellion EM 7 HV calculated with 90.7% protein of which is 100% caseinate protein.
** Cremodan 1001 IcePro is a commercially available emulsifier / stabilizer cocktail for ice-cream preparation where the emulsifier is propane-1,2-diol esters of fatty acids and of the type mono- and diglycerides, partly unsaturated and the stabilizers are locust bean gum, and guar gum.
*** Cremodan 709 VEG is a commercially available emulsifier / stabilizer cocktail for ice-cream preparation where the emulsifier is of the type mono- and diglycerides, partly unsaturated and the stabilizers are locust bean gum, guar gum and carrageenan.
**** Cremodan 315 is a commercial available emulsifier / stabilizer cocktail for ice-cream preparation where the emulsifier is of the type mono- and diglycerides and the stabilizers are locust bean gum and guar gum.
***** Excellion EM7 High Viscosity (EM 7 HV) is transglutaminase treated sodium caseinate.

Water, protein powder and carbohydrate ingredients were combined using a mix tank and subsequently subjected to high shear at a temperature of 60°C. The emulsifier/stabilizer blend was added to the melted fat (70°C) and this cocktail was added to the water phase while stirring. The resulting mix was pasteurized at 82°C for 120 seconds, homogenized (140/35 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of 18 L/h, an extrusion temperature of -5.5°C to -6.2°C and an overrun at the freeze outlet of about 100%. After filling, the ice cream was directly, frozen overnight in a hardening freezer at <-25°C and then stored in freezer of -18/-20°C. A part of the samples was subjected to a heat shock test.

Table 6

| Example | 1 | 2 | 3 | 4 |
|---|---|---|---|---|
| Processability* | + | + | + | + |
| Melting % w/w | 13 | 9 | 11 | 12 |
| Melting% w/w after Heat shock | 14 | 12 | 10 | 14 |
| Sensory | + | + | + | + |
| *+ = Good processability during ice cream preparation: ability to incorporate the air, visual good appearance, homogeneous, smooth | | | | |

Table 6 shows results from an experiment with different commercially available emulsifier / stabiliser cocktails, the emulsifier being of a) the type emulsifier propane-1,2-diol esters of fatty acids together with the type mono and diglycerides, partly unsaturated or b) the type mono- and diglycerides, partly unsaturated or c) the type mono- and diglycerides, saturated. It shows that good quality ice cream can be prepared with 1% protein from caseinate, and a protein to fat ratio of 10 using different emulsifier/stabilizer systems.

Next to this, apparently cross linking sodium caseinate with transglutaminase did not significantly change the functional properties of the caseinate in ice cream.

### Example 4: Ice cream comprising 10 wt% vegetable fat and 1 to 2 w/w% protein from Na-caseinate

Ice cream mixes were prepared according to the formulations shown in Table 7 below.

Table 7

| Example 2 in table 7 is not according to the invention. | | |
|---|---|---|
| Example % w/w | 1 | 2 |
| Coconut fat: Hardened coconut fat K93 Fujioil Europe | 10.0 | 10.0 |
| Sodium Caseinate (Excellion EM7, FrieslandCampina DMV) | 1.1 | 2.2 |
| Dextrose | 3.8 | 4.5 |
| Sucrose | 10.6 | 11.0 |
| Glucodry 355 (Sedamyl) | 10.0 | 8.2 |
| Cremodan 315** (Danisco) | 0.6 | 0.6 |
| Water | 64.0 | 63.6 |
| Total | 100.0 | 100.0 |
| | | |
| Protein content % w/w | 1.0 | 2.0 |
| Casein(ate) level* | 1.0 | 2.0 |
| Fat:protein ratio | 10.5 | 5.3 |
| *Na caseinate calculated with 90.7% protein of which is 100% caseinate protein. **Cremodan 315 is a commercially available emulsifier / stabilizer cocktail for ice-cream preparation where the emulsifier is of the type mono- and diglycerides and the stabilizers are locust bean gum and guar gum. | | |

Water, protein powder and carbohydrate ingredients were combined using a mix tank and subsequently subjected to high shear at a temperature of 60°C. The emulsifier/stabilizer blend was added to the melted fat (70°C) and this cocktail was added to the water phase while stirring. The resulting mix was pasteurized at 82°C for 120 seconds, homogenized (140/35 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of 18 L/h, an extrusion temperature of -5.5°C to -6.2°C and an overrun at the freeze outlet of about 100%. After filling, the ice cream was directly, frozen overnight in a hardening freezer at <-25°C and then stored in freezer of -18/-20°C. A part of the samples was subjected to a heat shock test.

Table 8

| Example | 1 | 2 |
|---|---|---|
| Processability ice cream preparation* | + | +/- |
| Melting % w/w | 12 | 72 |
| Melting % w/w after Heat shock | 14 | 86 |
| Sensory | + | - |
| Fat Particle Size Distribution | | |
| PSD fresh** d(0.5)/d(0.9) water (μm) | 1.1/2.0 | 0.7/1.7 |
| PSD fresh** d(0.5)/d(0.9) SDS/EDTA (μm) | 1.1/1.9 | 0.7/1.7 |
| PSD after ripening d(0.5)/d(0.9) Water (μm) | 0.8/2.1 | 1.0/2.1 |
| PSD after ripening d(0.5)/d(0.9) SDS/EDTA (μm) | 0.8/2.0 | 0.9/2.0 |

*+ =Good processability during ice cream preparation: ability to incorporate the air, visual good appearance, homogeneous, smooth. +/-: able to keep air in product, however quickly melting and not firm
** Samples were diluted direct after homogenization, before cooling in water or SDS/EDTA.

Table 8 shows again that ice cream prepared with a lower concentration sodium caseinate, at higher fat/protein ratio, provides much better physical and sensorial properties than ice cream prepared with a higher sodium caseinate content. It also appears that at higher protein levels the fat particle size distribution is not really different, meaning that at higher protein levels the emulsions are probably "overstabilised" or in other words show a too weak churning ability.

**Example 5: Ice cream comprising butterfat**

Ice cream mixes were prepared according to the formulations shown in Table 9 below.

Table 9

| Example % w/w | 1 | 2 | 3 | 4 |
|---|---|---|---|---|
| Coconut fat: Hardened coconut fat K93 Fujioil Europe | | | 10.0 | 10.0 |
| Butter (82.1% fat) | 12.18 | 12.18 | | |
| Sodium Caseinate (Excellion EM7, FrieslandCampina DMV) | 0.55 | 1.10 | 0.55 | 1.10 |
| Dextrose | 3.8 | 3.8 | 3.7 | 3.8 |
| Sucrose | 10.7 | 10.95 | 10.8 | 10.6 |
| Glucodry 355 (Sedamyl) | 9.7 | 9.1 | 10.0 | 10.0 |
| Cremodan 709 VEG (Danisco)** | 0.5 | 0.5 | 0.5 | 0.5 |
| Water | 62.6 | 62.4 | 64.5 | 64.0 |
| Total | 100.0 | 100.0 | 100.0 | 100.0 |
| | | | | |
| Protein content % w/w | 0.62 | 1.12 | 0.5 | 1.0 |
| Caseinate protein level* | 0.6 | 1.2 | 0.5 | 1.0 |

(continued)

| Example % w/w | 1 | 2 | 3 | 4 |
|---|---|---|---|---|
| Fat:protein ratio | 17.4 | 8.6 | 20.7 | 10.4 |
| *Na caseinate calculated with 90.7% protein of which is 100% caseinate protein; protein from butter 80% casein protein. ** Cremodan 709 VEG is a commercially available emulsifier / stabilizer cocktail for ice-cream preparation where the emulsifier is of the type mono- and diglycerides, partly unsaturated and the stabilizers are locust bean gum, guar gum and carrageenan. | | | | |

Water, protein powder and carbohydrate ingredients were combined using a mix tank and subsequently subjected to high shear at a temperature of 60°C. The emulsifier/stabilizer blend was added to the melted fat (70°C) and this cocktail was added to the water phase while stirring. The resulting mix was pasteurized at 82°C for 120 seconds, homogenized (140/35 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of about 18 L/h, an extrusion temperature of -5'.5°C to -6.2°C and an overrun at the freeze outlet of about 100%. After filling, the ice cream was directly, frozen overnight in a hardening freezer at <-25°C and then stored in freezer of -18/-20°C. A part of the samples was subjected to a heat shock test.

Table 10

| Example | 1 | 2 | 3 | 4 |
|---|---|---|---|---|
| Processability ice cream preparation* | + | + | + | + |
| Melting % w/w | 6.4 | 11.5 | 11.4 | 10.8 |
| Melting % w/w after Heat shock | 8.3 | 14.6 | 11.0 | 9.9 |
| Sensory | + | + | + | + |
| Fat particle size distribution of ice cream mix | | | | |
| PSD fresh** d(0.5)/d(0.9) water ($\mu$m) | 0.9/1.7 | 0.7/1.6 | 0.9/1.8 | 0.7/1.6 |
| PSD fresh** d(0.5)/d(0.9) SDS/EDTA ($\mu$m) | 0.9/1.6 | 0.7/1.6 | 0.8/1.7 | 0.7/1.6 |
| PSD after ripening d(0.5)/d(0.9) Water ($\mu$m) | 0.9/1.7 | 0.7/1.6 | 0.9/1.8 | 0.7/1.6 |
| *+ =Good processability during ice cream preparation: ability to incorporate the air, visual good appearance, homogeneous, smooth. ** Samples were diluted in water or SDS/EDTA after cooling down. | | | | |

The results presented in Table 10 show that at a dosage of 0.5% and 1% protein from caseinate, good quality ice cream can be prepared with both milkfat and vegetable fat, based on resistance to heat shock, sensory, melting behavior, processability and particle size distribution of the ice cream mixture after homogenization and after overnight ripening.

## Example 6: Ice cream comprising Ca caseinate as a protein source

Ice cream mixes were prepared according to the formulations shown in Table 11 below.

Table 11

| Example % w/w | 1 | 2 |
|---|---|---|
| Coconut fat Hardened coconut fat K93 (Fuji oil Europe) | 5 | 5 |
| Sodium Caseinate (Excellion EM7, FrieslandCampina DMV) | | 1.1 |
| Calcium Caseinate (Excellion Calcium caseinate S (FrieslandCampina DMV) | 0.56 | |
| SMP medium heat (Promex) | 1.42 | |
| Dextrose | 3.5 | 4.0 |

(continued)

| Example % w/w | 1 | 2 |
|---|---|---|
| Sucrose | 12.4 | 12.5 |
| Glucodry 355 (Sedamyl) | 11.8 | 12.2 |
| Cremodan 709 VEG** (Danisco) Emusifier/stabilizer | 0.6 | 0.6 |
| Water | 64.7 | 64.6 |
| Total | 100.0 | 100.0 |
| | | |
| Protein content % w/w | 1.0 | 1.0 |
| Casein(ate) protein level* | 0.9 | 1 |
| Fat:protein ratio | 6.1 | 5.4 |

*SMP: calculated with 80% casein protein and Na caseinate calculated with 90.7% protein of which is 100% caseinate protein.
**Cremodan 709 VEG is a commercially available emulsifier / stabilizer cocktail for ice-cream preparation where the emulsifier is of the type mono- and diglycerides, partly unsaturated and the stabilizers are locust bean gum, guar gum and carrageenan.

Water, protein powder and carbohydrate ingredients were combined using a mix tank and subsequently subjected to high shear at a temperature of 60°C. The emulsifier/stabilizer blend was added to the melted fat (70°C) and this cocktail was added to the water phase while stirring. The resulting mix was pasteurized at 82°C for 120 seconds, homogenized (175/20 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of about 18 L/h, an extrusion temperature of -5.5°C to -6.2°C and an overrun at the freeze outlet of about 100%. After filling, the ice cream was directly, frozen overnight in a hardening freezer at <-25°C and then stored in freezer of -18/-20°C. A part of the samples was subjected to a heat shock test.

Table 12

| Example | 1 | 2 |
|---|---|---|
| Processability* | + | + |
| Sensory** | + | + |
| Melting % w/w | 3 | 7 |
| Melting % w/w after Heat shock | 4 | 10 |

*Good processability ice cream preparation:+ = Ability to incorporate the air, visual good appearance.; homogeneous, smooth.
** Creamy mouthfeel, nice white appearance.

The results presented in Table 12 show that it is also possible to prepare good quality ice cream with calcium caseinate in combination with skimmed milk powder.

**Example 7: Ice cream comprising Polysorbate 80 *(polyoxyethylene (20) sorbitan mono-oleate)* as emulsifier**

Ice cream mixes were prepared according to the formulation shown in Table 13 below.

Table 13

| Example % w/w | 1 | 2 |
|---|---|---|
| Coconut fat Hardened coconut fat K93 (Fuji oil Europe) | 10 | 10 |

(continued)

| Example % w/w | 1 | 2 |
|---|---|---|
| Sodium Caseinate (Excellion EM7, FrieslandCampina DMV) * | 1.1 | 1.1 |
| Polysorbate 80 (Croda, Germany) | 0.15 | 0.20 |
| Locust bean gum L150 (Unipectin AG, Germany) | 0.18 | 0.18 |
| Guar gum Carrastab T40-20 (Caldic, Netherlands) | 0.06 | 0.06 |
| Carrrageenan Satiagel ADG 16U (Cargill, Netherlands) | 0.02 | 0.02 |
| Dextrose | 3.8 | 3.8 |
| Sucrose | 10.6 | 10.6 |
| Glucodry 330 (Sedamyl) | 9.7 | 9.7 |
| Water | 64.4 | 64.3 |
| Total | 100.00 | 10.00 |
| | | |
| Protein content % w/w | 1.1 | 1.1 |
| Casein(ate) protein level* | 1.0 | 1.0 |
| Fat:protein ratio | 9.1 | 9.1 |
| *Na caseinate calculated with 90.7% protein of which is 100% caseinate protein. | | |

Water, protein powder, carbohydrate, emulsifier and stabilizer ingredients were combined using a mix tank and subsequently subjected to high shear at a temperature of 65°C. The melted fat (75°C) was added to the water phase while stirring. The resulting mix was pasteurized at 82°C for 120 seconds, homogenized (175/20 bar and 75°C - 82°C), and followed by a rapid in line cooling step to 4°C using a plate heat exchanger. The mix was held overnight at 2-7°C prior to freezing. Ice cream mixes were frozen using an APV MF 50 ice cream freezer (scraped surface heat exchanger) at a mix flow rate of about 18 L/h, an extrusion temperature of -5.5°C to -6.2°C and an overrun at the freeze outlet of about 100%. After filling, the ice cream was directly, frozen overnight in a hardening freezer at <-25°C and then stored in freezer of -18/-20°C. A part of the samples was subjected to a heat shock test.

Table 14

| Example | 1 | 2 |
|---|---|---|
| Melting w/w% after heat shock | 7.1 | 4.9 |
| Melting w/w% after heat shock | 4.5 | 2.0 |
| Processing during extrusion | + | + |
| Sensory | + | + |

The results presented in Table 14 show that it is possible to prepare good quality ice cream using Polysorbate 80 as an emulsifier.

## Claims

1. Method for preparing an aerated frozen confectionery product comprising the steps of:

   a) providing an ingredient mix, which mix comprises:

   - 3 to 15% by weight fat;
   - 5 to 40% by weight carbohydrates;
   - up to 5% by weight of a stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5 % by weight protein, whereof at least 30% by weight is caseinate;
- and which mix contains fat and protein in a weight ratio of at least 5;

b) pasteurizing and homogenizing the ingredient mix;
c) ripening the ingredient mix of step b) for at least one hour at a temperature between 0 and 10°C;
d) freezing while aerating the ingredient mix of step c) up to an overrun of 75 to 150%;
e) hardening the frozen aerated ingredient mix.

2. Method according to claim 1, wherein in step c) the ingredient mix of step b) is ripened for 3 to 24 hours at a temperature between 0 and 10°C.

3. Method according to claim 1 or 2, wherein in step e) the frozen aerated ingredient mix of step d) is hardened by freezing it to a temperature of -18°C or lower.

4. Method according to any of the previous claims, wherein the ingredient mix of step a) comprises up to 1.25% by weight protein.

5. Method according to any of the previous claims, wherein in the ingredient mix of step a) at least 95% by weight of the total amount of protein is caseinate.

6. Method according to any of the previous claims, wherein the ingredient mix of step a) comprises not more than 12% by weight fat.

7. An aerated frozen confectionery product having an overrun of 75 to 150%, comprising:

- 3 to 15% by weight fat;
- 5 to 40% by weight carbohydrates;
- up to 5% by weight stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5% by weight protein, whereof at least 30% by weight of the total amount of protein is caseinate;
- and which product contains fat and protein in a weight ratio of at least 5.

8. Aerated product according to claim 7, wherein the product comprises up to 1.25% by weight protein.

9. Aerated product according to claim 7 or 8, wherein the product has an overrun of 75 to 150%, comprises 3 to 12% by weight fat and comprises 0.25 to 1.25% by weight protein of which at least 90% by weight is caseinate, a total solids content between 35 and 40% by weight and wherein the ratio fat to protein is 5 or higher.

10. Use of an ingredient mix comprising:

- 3 to 15% by weight fat;
- 5 to 40% by weight carbohydrates;
- up to 5% by weight stabilizer and emulsifier, including 0.2 to 3% by weight of stabilizer comprising locust bean gum, guar gum, carrageenan, microcrystalline cellulose, carboxymethylcellulose, pectin, gum Arabic, gellan gum, xanthan gum, modified starch, alginate, gum ghatti, gum karaya, gum konjac, agar-agar, oat or a combination thereof, and including 0.2 to 3% by weight of emulsifier comprising mono- and diglycerides of fatty acids, lactic acid esters of mono- or diglycerides (LACTEM), acetic acid esters of mono- or diglycerides (ACETEM), diacetyltartaric acid esters of mono- and diglycerides (DATEM), sucrose esters of fatty acids, polyglycerol esters of fatty acids, polyoxyethylene sorbitan fatty acid mono-esters, sodium stearoyl lactylate, calcium stearoyl lactylate, propylene glycol monostearate, lecithin, lysolecithin, phospholipoproteins or mixtures thereof;
- 0.25 to 1.5% by weight protein, whereof at least 30% by weight of the total amount of protein is caseinate; and which mix contains fat and protein in a weight ratio of at least 5;
for preparing a frozen aerated confectionery product according to claim 7 or 8.

**Patentansprüche**

1. Verfahren zur Herstellung eines luftdurchsetzten gefrorenen Süßwarenprodukts, umfassend die Schritte:

a) Bereitstellen eines Zutatengemischs, wobei das Gemisch umfasst:

- 3 bis 15 Gew.-% Fett;
- 5 bis 40 Gew.-% Kohlenhydrate;
- bis zu 5 Gew.-% an einem Stabilisator und Emulgator, einschließlich 0,2 bis 3 Gew.-% Stabilisator, umfassend Johannisbrotkernmehl, Guargummi, Carrageen, mikrokristalline Cellulose, Carboxymethylcellulose, Pektin, Gummi arabicum, Gellangummi, Xanthangummi, modifizierte Stärke, Alginat, Ghattigummi, Karayagummi, Konjakgummi, Agar-Agar, Hafer oder eine Kombination davon, und einschließlich 0,2 bis 3 Gew.-% Emulgator, umfassend Mono- und Diglyceride von Fettsäuren, Milchsäureester von Mono- oder Diglyceriden (LACTEM), Essigsäureester von Mono- oder Diglyceriden (ACETEM), Diacetylweinsäureestern von Mono- oder Diglyceriden (DATEM), Saccharoseeseter von Fettsäuren, Polyglycerolester von Fettsäuren, Polyoxyethylensorbitanfettsäuremonoester, Natriumstearoyllactylat, Calciumstearoyllactylat, Propylenglycolmonostearat, Lecithin, Lysolecithin, Phospholipoproteine und Gemische davon;
- 0,25 bis 1,5 Gew.-% Protein, wovon wenigstens 30 Gew.-% Kaseinat sind;
- und wobei das Gemisch Fett und Protein in einem Gewichtsverhältnis von wenigstens 5 enthält;

b) Pasteurisieren und Homogenisieren des Zutatengemischs;
c) Reifen des Zutatengemischs von Schritt b) für wenigstens eine Stunde bei einer Temperatur zwischen 0 und 10 °C;
d) Einfrieren unter Durchlüften des Zutatengemischs von Schritt c) auf einen Aufschlag von 75 bis 150 %;
e) Härten des gefrorenen luftdurchsetzten Zutatengemischs.

2. Verfahren gemäß Anspruch 1, wobei bei Schritt c) das Zutatengemisch von Schritt b) für 3 bis 24 Stunden bei einer Temperatur zwischen 0 und 10 °C gereift wird.

3. Verfahren gemäß Anspruch 1 oder 2, wobei bei Schritt e) das gefrorene luftdurchsetzte Zutatengemisch von Schritt d) durch Einfrieren davon auf eine Temperatur von -18 °C oder darunter gehärtet wird.

4. Verfahren gemäß einem der vorstehenden Ansprüche, wobei das Zutatengemisch von Schritt a) bis zu 1,25 Gew.-% Protein umfasst.

5. Verfahren gemäß einem der vorstehenden Ansprüche, wobei bei dem Zutatengemisch von Schritt a) wenigstens 95 Gew.-% der Gesamtmenge an Protein Kaseinat ist.

6. Verfahren gemäß einem der vorstehenden Ansprüche, wobei das Zutatengemisch von Schritt a) nicht mehr als 12 Gew.-% Fett umfasst.

7. Luftdurchsetztes gefrorenes Süßwarenprodukt mit einem Aufschlag von 75 bis 150 %, umfassend:

- 3 bis 15 Gew.-% Fett;
- 5 bis 40 Gew.-% Kohlenhydrate;
- bis zu 5 Gew.-% Stabilisator und Emulgator, einschließlich 0,2 bis 3 Gew.-% Stabilisator, umfassend Johannisbrotkernmehl, Guargummi, Carrageen, mikrokristalline Cellulose, Carboxymethylcellulose, Pektin, Gummi arabicum, Gellangummi, Xanthangummi, modifizierte Stärke, Alginat, Ghattigummi, Karayagummi, Konjakgummi, Agar-Agar, Hafer oder eine Kombination davon, und einschließlich 0,2 bis 3 Gew.-% Emulgator, umfassend Mono- und Diglyceride von Fettsäuren, Milchsäureester von Mono- oder Diglyceriden (LACTEM), Essigsäureester von Mono- oder Diglyceriden (ACETEM), Diacetylweinsäureestern von Mono- oder Diglyceriden (DATEM), Saccharoseeseter von Fettsäuren, Polyglycerolester von Fettsäuren, Polyoxyethylensorbitanfettsäuremonoester, Natriumstearoyllactylat, Calciumstearoyllactylat, Propylenglycolmonostearat, Lecithin, Lysolecithin, Phospholipoproteine und Gemische davon;
- 0,25 bis 1,5 Gew.-% Protein, wobei wenigstens 30 Gew.-% der Gesamtmenge an Protein Kaseinat sind;
- und wobei das Produkt Fett und Protein in einem Gewichtsverhältnis von wenigstens 5 enthält.

8. Luftdurchsetztes Produkt gemäß Anspruch 7, wobei das Produkt bis zu 1,25 Gew.-% Protein umfasst.

9. Luftdurchsetztes Produkt gemäß Anspruch 7 oder 8, wobei das Produkt einen Aufschlag von 75 bis 150 % aufweist, 3 bis 12 Gew.-% Fett umfasst und 0,25 bis 1,25 Gew.-% Protein, wovon wenigstens 90 Gew.-% Kaseinat sind, umfasst, einen Gesamtfeststoffgehalt von zwischen 35 und 40 Gew.-% aufweist und wobei das Verhältnis von Fett zu Protein 5 oder höher ist.

10. Verwendung eines Zutatengemischs umfassend:

- 3 bis 15 Gew.-% Fett;
- 5 bis 40 Gew.-% Kohlenhydrate;
- bis zu 5 Gew.-% Stabilisator und Emulgator, einschließlich 0,2 bis 3 Gew.-% Stabilisator, umfassend Johannisbrotkernmehl, Guargummi, Carrageen, mikrokristalline Cellulose, Carboxymethylcellulose, Pektin, Gummi arabicum, Gellangummi, Xanthangummi, modifizierte Stärke, Alginat, Ghattigummi, Karayagummi, Konjakgummi, Agar-Agar, Hafer oder eine Kombination davon, und einschließlich 0,2 bis 3 Gew.-% Emulgator, umfassend Mono- und Diglyceride von Fettsäuren, Milchsäureester von Mono- oder Diglyceriden (LACTEM), Essigsäureester von Mono- oder Diglyceriden (ACETEM), Diacetylweinsäureestern von Mono- oder Diglyceriden (DATEM), Saccharoseeseter von Fettsäuren, Polyglycerolester von Fettsäuren, Polyoxyethylensorbitanfettsäuremonoester, Natriumstearoyllactylat, Calciumstearoyllactylat, Propylenglycolmonostearat, Lecithin, Lysolecithin, Phospholipoproteine und Gemische davon;
- 0,25 bis 1,5 Gew.-% Protein, wobei wenigstens 30 Gew.-% der Gesamtmenge an Protein Kaseinat sind; und wobei das Gemisch Fett und Protein in einem Gewichtsverhältnis von wenigstens 5 enthält;
zur Herstellung eines gefrorenen luftdurchsetzten Süßwarenprodukts gemäß Anspruch 7 oder 8.

**Revendications**

1. Procédé pour la préparation d'un produit de confiserie aéré congelé comprenant les étapes de :

a) mise à disposition d'un mélange d'ingrédients, lequel mélange comprenant :

- 3 à 15 % en poids de graisses ;
- 5 à 40 % en poids de glucides ;
- jusqu'à 5 % en poids d'un stabilisant et d'un émulsifiant, comprenant 0,2 à 3 % en poids de stabilisant comprenant de la gomme de caroube, de la gomme de guar, un carraghénane, de la cellulose microcristalline, de la carboxyméthylcellulose, de la pectine, de la gomme arabique, de la gomme de gellane, de la gomme de xanthane, de l'amidon modifié, un alginate, de la gomme ghatti, de la gomme karaya, de la gomme konjac, de l'agar-agar, de l'avoine ou une combinaison correspondante, et comprenant 0,2 à 3 % en poids d'émulsifiant comprenant des monoglycérides et diglycérides d'acides gras, des esters d'acide lactique de monoglycérides ou de diglycérides (LACTEM), des esters de l'acide acétique de monoglycérides ou de diglycérides (ACETEM), des esters d'acide diacétyltartrique de monoglycérides et de diglycérides (DATEM), des esters de saccharose d'acides gras, des esters de polyglycérol d'acides gras, des monoesters d'acide gras de polyoxyéthylène sorbitane, du stéaroyle lactylate de sodium, du stéaroyle lactylate de calcium, du monostéarate de propylèneglycol, de la lécithine, de la lysolécithine, des phospholipoprotéines ou des mélanges correspondants ;
- 0,25 à 1,5 % en poids de protéines, parmi lesquelles au moins 30 % en poids est du caséinate ;
- et lequel mélange contient des graisses et des protéines en un rapport pondéral d'au moins 5 ;

b) pasteurisation et homogénéisation du mélange d'ingrédients ;
c) affinage du mélange d'ingrédients de l'étape b) pendant au moins une heure à une température comprise entre 0 et 10 °C ;
d) congélation du mélange d'ingrédients de l'étape c) tout en l'aérant jusqu'à un foisonnement de 75 à 150 % ;
e) durcissement du mélange d'ingrédients aéré congelé.

2. Procédé selon la revendication 1, où dans l'étape c) le mélange d'ingrédients de l'étape b) est affiné pendant 3 à 24 heures à une température comprise entre 0 et 10 °C.

3. Procédé selon la revendication 1 ou 2, où dans l'étape e) le mélange d'ingrédients aéré congelé de l'étape d) est durci par congélation de celui-ci à une température de -18 °C ou moins.

4. Procédé selon l'une quelconque des revendications précédentes, le mélange d'ingrédients de l'étape a) comprenant jusqu'à 1,25 % en poids de protéines.

5. Procédé selon l'une quelconque des revendications précédentes, où dans le mélange d'ingrédients de l'étape a) au moins 95 % en poids de la quantité totale de protéines est du caséinate.

6. Procédé selon l'une quelconque des revendications précédentes, le mélange d'ingrédients de l'étape a) ne comprenant pas plus de 12 % en poids de graisses.

7. Produit de confiserie aéré congelé possédant un foisonnement de 75 à 150 %, comprenant :

   - 3 à 15 % en poids de graisses ;
   - 5 à 40 % en poids de glucides ;
   - jusqu'à 5 % en poids d'un stabilisant et d'un émulsifiant, comprenant 0,2 à 3 % en poids de stabilisant comprenant de la gomme de caroube, de la gomme de guar, un carraghénane, de la cellulose microcristalline, de la carboxyméthylcellulose, de la pectine, de la gomme arabique, de la gomme de gellane, de la gomme de xanthane, de l'amidon modifié, un alginate, de la gomme ghatti, de la gomme karaya, de la gomme konjac, de l'agar-agar, de l'avoine ou une combinaison correspondante, et comprenant 0,2 à 3 % en poids d'émulsifiant comprenant des monoglycérides et diglycérides d'acides gras, des esters d'acide lactique de monoglycérides ou de diglycérides (LACTEM), des esters de l'acide acétique de monoglycérides ou de diglycérides (ACETEM), des esters d'acide diacétyltartrique de monoglycérides et de diglycérides (DATEM), des esters de saccharose d'acides gras, des esters de polyglycérol d'acides gras, des monoesters d'acide gras de polyoxyéthylène sorbitane, du stéaroyle lactylate de sodium, du stéaroyle lactylate de calcium, du monostéarate de propylèneglycol, de la lécithine, de la lysolécithine, des phospholipoprotéines ou des mélanges correspondants ;
   - 0,25 à 1,5 % en poids de protéines, parmi lesquelles au moins 30 % en poids de la quantité totale de protéines est du caséinate ;
   - et lequel produit contient des graisses et des protéines en un rapport pondéral d'au moins 5.

8. Produit aéré selon la revendication 7, le produit comprenant jusqu'à 1,25 % en poids de protéines.

9. Produit aéré selon la revendication 7 ou 8, le produit possédant un foisonnement de 75 à 150 %, comprenant 3 à 12 % en poids de graisses et comprenant 0,25 à 1,25 % en poids de protéines desquelles au moins 90 % en poids est du caséinate, une teneur totale en solides comprise entre 35 et 40 % en poids et le rapport de graisses à protéines étant de 5 ou plus.

10. Utilisation d'un mélange d'ingrédients comprenant

    - 3 à 15 % en poids de graisses ;
    - 5 à 40 % en poids de glucides ;
    - jusqu'à 5 % en poids d'un stabilisant et d'un émulsifiant, comprenant 0,2 à 3 % en poids de stabilisant comprenant de la gomme de caroube, de la gomme de guar, un carraghénane, de la cellulose microcristalline, de la carboxyméthylcellulose, de la pectine, de la gomme arabique, de la gomme de gellane, de la gomme de xanthane, de l'amidon modifié, un alginate, de la gomme ghatti, de la gomme karaya, de la gomme konjac, de l'agar-agar, de l'avoine ou une combinaison correspondante, et comprenant 0,2 à 3 % en poids d'émulsifiant comprenant des monoglycérides et diglycérides d'acides gras, des esters d'acide lactique de monoglycérides ou de diglycérides (LACTEM), des esters de l'acide acétique de monoglycérides ou de diglycérides (ACETEM), des esters d'acide diacétyltartrique de monoglycérides et de diglycérides (DATEM), des esters de saccharose d'acides gras, des esters de polyglycérol d'acides gras, des monoesters d'acide gras de polyoxyéthylène sorbitane, du stéaroyle lactylate de sodium, du stéaroyle lactylate de calcium, du monostéarate de propylèneglycol, de la lécithine, de la lysolécithine, des phospholipoprotéines ou des mélanges correspondants ;
- 0,25 à 1,5 % en poids de protéines, parmi lesquelles au moins 30 % en poids de la quantité totale de protéines est du caséinate ;

et lequel mélange contient des graisses et des protéines en un rapport pondéral d'au moins 5 ; pour la préparation d'un produit de confiserie congelé aéré selon la revendication 7 ou 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1282502 A

**Non-patent literature cited in the description**

- **H.D. GOFF ; R.W. HARTEL.** Ice Cream. Springer, 2013

- **DOUGLAS GOFF ; RICHARD W. HARTEL.** Ice Cream. Springer, 2013, 188